## Europäisches Patentamt
## European Patent Office
## Office européen des brevets

(19)

(11) Numéro de publication: **0 070 221**
**B1**

(12)

# FASCICULE DE BREVET EUROPEEN

(45) Date de publication du fascicule du brevet:
**21.11.84**

(51) Int. Cl.³: **B 23 Q 11/00**, B 23 Q 1/26

(21) Numéro de dépôt: **82401222.3**

(22) Date de dépôt: **30.06.82**

(54) **Dispositif de répartition de la pression exercée par un chariot de machine-outil sur ses glissières.**

(30) Priorité: **15.07.81 FR 8113748**

(43) Date de publication de la demande:
**19.01.83 Bulletin 83/3**

(45) Mention de la délivrance du brevet:
**21.11.84 Bulletin 84/47**

(84) Etats contractants désignés:
**AT BE CH DE GB IT LI LU NL SE**

(56) Documents cités:
**FR - A - 1 069 679**
**FR - A - 1 573 647**
**FR - A - 2 135 556**
**FR - A - 2 163 923**
**FR - E - 62 906**
**GB - A - 2 029 287**

(73) Titulaire: **CENTRE D'ETUDES DU FRAISAGE (C.E.F.),
80 rue des Meuniers, F-92220 Bagneux (FR)**

(72) Inventeur: **Rouzaud, Guy, Avenue de la Malabry,
F-92290 Chatenay (FR)**

(74) Mandataire: **Loyer, Yves et al, CABINET PIERRE
LOYER 18, rue de Mogador, F-75009 Paris (FR)**

BUNDESDRUCKEREI BERLIN

## Description

Dans les machines-outils comportant un chariot coulissant horizontalement, tel qu'un chariot ou bélier de fraiseuse portant la tête porte-broche, le centre de gravité du chariot se déplace et de ce fait le diagramme des pressions exercées par le chariot sur les glissières est variable, et dans ses positions avancée et reculée le chariot se trouve avoir un porte à faux important et une tendance au basculement.

Il est d'autre part avantageux de recouvrir les faces de frottement des contre-glissières en fonte ou en acier portées par le support ou le bâti sur lequel coulisse le chariot avec un matériau à faible coefficient de frottement, tel qu'une lame de matière plastique de caractéristiques appropriées, ce qui diminue l'effort de déplacement du chariot, autorise une plus grande vitesse de déplacement pour la même puissance de moteurs, et assure pour des déplacements très courts ou à vitesse très lente des mouvements dépourvus de saccades et du phénomène couramment désigné par l'expression »Stick slip«.

Mais ce matériau subit une déformation de compression d'importance inégale selon la position du chariot qui tend à diminuer la précision de position de l'outil car les forces résultant de la compression de la lame de matériau à faible coefficient de frottement se répartissent de façon à équilibrer les forces de gravités appliquées par le chariot, lesquelles sont variables en position et font varier la déformation de compression ci-dessus.

Différentes solutions ont d'ores et déjà été préconisées pour remédier aux difficultés créées par les déplacements du chariot.

Certaines d'entre elles consistent à prévoir un contrepoids exerçant sur le chariot des efforts de soulagement dont la résultante est variable en position selon la position du centre de gravité du chariot ou qui créent un moment de basculement antagoniste à celui provoqué par les déplacements du chariot.

Une telle disposition est décrite au brevet GB 2 029 287 au nom de SKODA: Dans ce brevet, les efforts résultant du contrepoids sont transmis aux extrémités du bélier par l'intermédiaire d'une poutre sur les extrémités de laquelle repose ledit bélier, cette poutre portant des cames inférieures sur lesquelles roulent des galets reliés au contrepoids par des cables et des poulies de renvoi, l'un au moins de ces cables comportant un ressort ou un zone élastique intermédiaire.

On voit tout de suite la complication constructive considérable des systèmes auxquels on se trouve conduit dans le seul but d'uniformiser les pressions ou de contrecarrer la tentance du bélier à la flexion.

Une autre solution décrite au brevet français n° 75 03217 (publication 2 299 117) déposé le 3 Février 1975 au nom de la Société HURE, consiste à prévoir une ou plusieurs barres formant cames, portées par le chariot, coopérant avec des galets portés par le support du chariot, les barres et galets étant disposés et conformés de façon à appliquer à la partie antérieure du bélier une force dirigée vers le haut et équilibrant le poids de la partie en porte à faux du chariot. Ce brevet décrit les caractéristiques du préambule.

Cette solution, bien que de construction déjà beaucoup plus simple que la précédente, reste également compliquée, coûteuse, et d'une fiabilité incertaine.

Le brevet français 1 069 679 décrit une solution dans laquelle on emploie un galet compensateur porté par mobile, roulant sur un chemin de roulement parallèle aux glissières verticales de la console et sur lequel est appliqué un effort variable en fonction des déplacements horizontaux du bélier sur la console mobile, cette variation étant commandée par un galet de contrôle porté par la console et coopérant avec une came portée par le bélier.

Dans cette solution, comme dans la précédente, le point auquel s'applique l'effort variable conserve une position pratiquement fixe ce qui rend nécessaire une transformation du déplacement, dont l'amplitude est mesurée en un point donné, en en effort variable appliqué en un autre point par un système de transmission hydraulique ou mécanique qui se traduit également en une réalisation compliqué et coûteuse.

D'autre part, toutes ces solutions ont en commun de procéder par diminution des efforts dus au porte à faux en appliquant aux régions condidérées des efforts de direction contraire.

Dans le but de de réaliser une solution simple, peu coûteuse et facile à mettre en œuvre, la présente invention prend le contre pied des solutions précédentes, en appliquant un effort supplémentaire sur les régions des glissières situées à l'opposé de celles où le porte à faux s'exerce et réalise ainsi l'uniformisation par accroissement et non diminution des pressions globales exercées.

De plus, le but de l'invention étant, non pas de remédier aux déformations du bélier ni au couple de renversement de la console, mais aux déformations du matériau à faible coefficient de frottement interposé entre contre-glissières et chariot, les efforts supplémentaires sont appliqués au droit des contre-glissières, et ceci constitue un condition nécessaire au résultat recherché.

Conformément à l'invention, le chariot porte, au droit et au dessus de chaque glissière inférieure deux cames longitudinales, situées respectivement sur chacune de ses zones avant et arrière et la ou les contre-glissières supérieures du support comporten à chaque extrémité un galet roulant sur la came correspondante et monté coulissant verticalement à l'encontre d'un ressort ou l'équivalent, le profil des cames et les caractéristiques des ressorts étant établis de telle sorte quele diagramme des pressions exercées par le poids du chariot et l'effort appliqué par les galets donnent une répartition des pressions à peu près uniforme quelle que soit la position du chariot, avec une résultante centrée en permanence dans la zone médiane de la contre-glissière inférieure du support.

Par ce moyen, la déformation de compression du matériau à faible coefficient de frottement reste constante dans les limites des tolérances du positionnement de l'outil, le chariot reste constamment plaqué sur sa face de référence de glissement et la stabilité de l'ensemble en toutes positions est amélioré.

D'autre part, le dispositif permet d'adopter une course du bélier ou chariot plus grande que la longueur du support ou console tout en conservant la résultante du poids et des forces des galets sur la glissière du support et de conserver une répartition de la pression compatible avec la résistance mécanique du matériau à faible coefficient de frottement.

Enfin, cette solution à l'avantage d'une grande simplicité mécanique. Sans doute les forces appliquées sur les glissières ne sont pas amoindries mais augmentées de celles exercées par les galets, mais l'avantage résultant du recentrage de ces forces rend négligeable les inconvénients de cette augmentation, car la pression superficielle par unité de longueur se trouve, non seulement régularisée mais diminuée, par rapport au maximum précédemment atteint, ce qui est beaucoup plus important.

L'invention vise également les dispositions suivantes:

a)  La distance entre les points bas des cames est inférieure ou égale à la distance entre les galets.

b)  Le profil des cames est tel que lorsque le centre de gravité du chariot est en position centrale, c'est-à-dire au voisinage du milieu des glissières inférieures, les pressions exercées par les galets sont égales.

c)  Les zones avant et arrière du chariot qui sont couvertes par cames s'étendent au moins depuis les points occupés respectivement sur le chariot en position centrale par les galets avant et arrière jusqu'aux points occupés respectivement par les mêmes galets lorsque le chariot est complètement reculé et lorsqu'il est complètement avancé.

d)  La longueur d'une came est supérieure ou égale à la course correspondante du chariot à partir de la position centrale.

Par course correspondante, il faut entendre la course du chariot dans laquelle cette came est active.

e)  Les cames sont décalées latéralement.

L'invention est illustrée par le dessin annexé sur lequel:

La figure 1 est une vue schématique latérale illustrant le principe de l'invention;

La figure 2 est une vue en coupe transversale selon A-A de la figure 1;

La figure 3 est une vue de détail, en coupe longitudinale d'un mode de réalisation du montage des galets;

Les figures 4 et 5 illustrent schématiquement, en vues analogues aux figures 1 et 2, une variante de l'invention;

Les figures 6 à 9 illustrent la répartition des pressions sur les glissières obtenue par le moyen de l'invention.

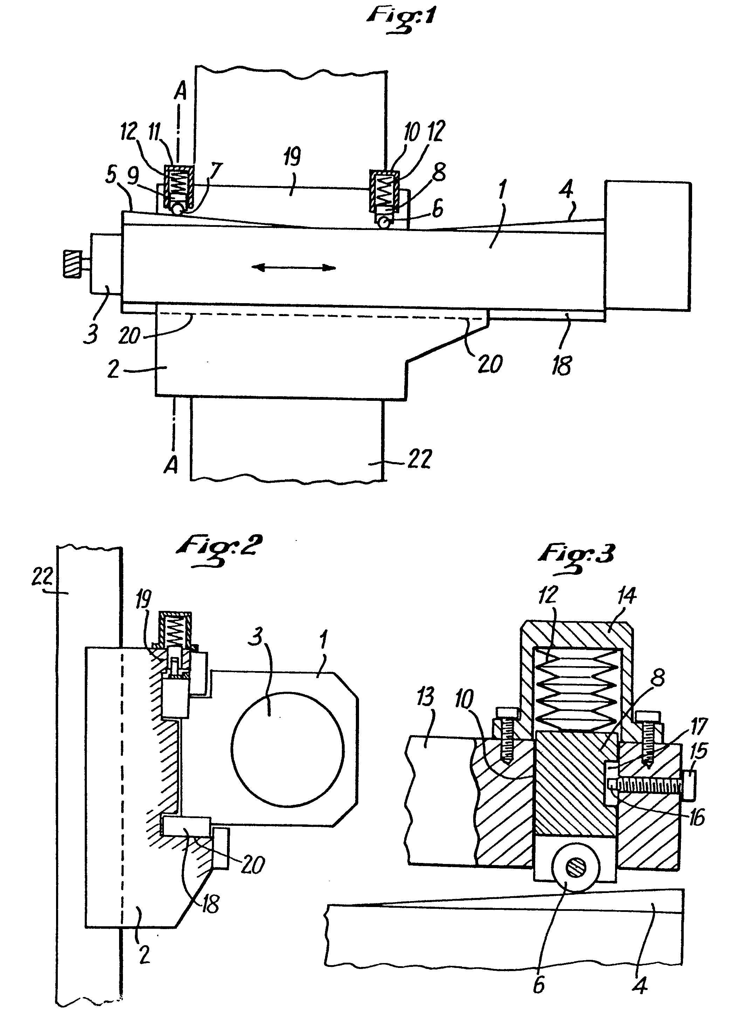

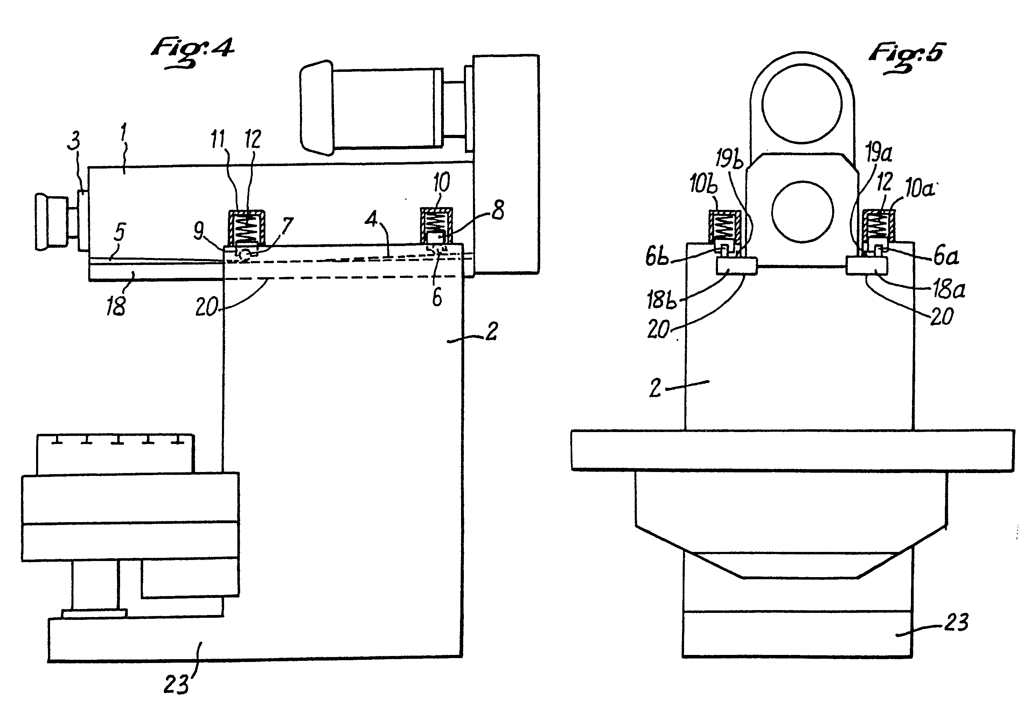

En se reportant à ces figures, on voit que l'invention s'applique à un chariot de machine-outil 1 qui coulisse sur un support 2, lequel peut être une console elle-même coulissant sur un montant 22 (figures 1 et 2), ou le bâti 23 de la machine (figures 4 et 5). Le chariot 1 comporte à l'avant une tête porte-outil 3 de type quelconque.

Conformément à l'invention, le chariot 1 porte, au droit de chaque glissière inférieure 18, deux cames longitudinales 4 et 5 situées sur la zone avant et sur la zone arrière du chariot 1 et chaque contre-glissière supérieure 19, le support 2 porte à ses deux extrémités des galets 6, 7 montés sur des pistons 8, 9 coulissant dans des logements 10—11 du support 2 à l'encontre de ressorts ou l'équivalent 12. Le profil de chaque came et les caractéristiques des ressorts 12 sont choisis de telle sorte que les efforts appliqués par les ressorts 12 combinés avec les efforts de gravité du chariot 1 fournissent une répartition de pression à peu près uniforme avec une résultante centrée sur la zone médiane des contre-glissières 20 du support.

La figure 3 montre un détail de réalisation dans lequel le galet 6 est monté sur le piston 8 dans un logement 10 prévu dans une pièce 13 liée au support 2 et qui peut être la contre-glissière supérieure 19.

A l'arrière du piston 8 est prévu un empilement de rondelles élastiques formant ressort 12 monté dans un culot 14 boulonné sur la pièce 13. Une vis latérale 15 porte un téton antirotation 16 qui coulisse dans une rainure 17 du piston 8.

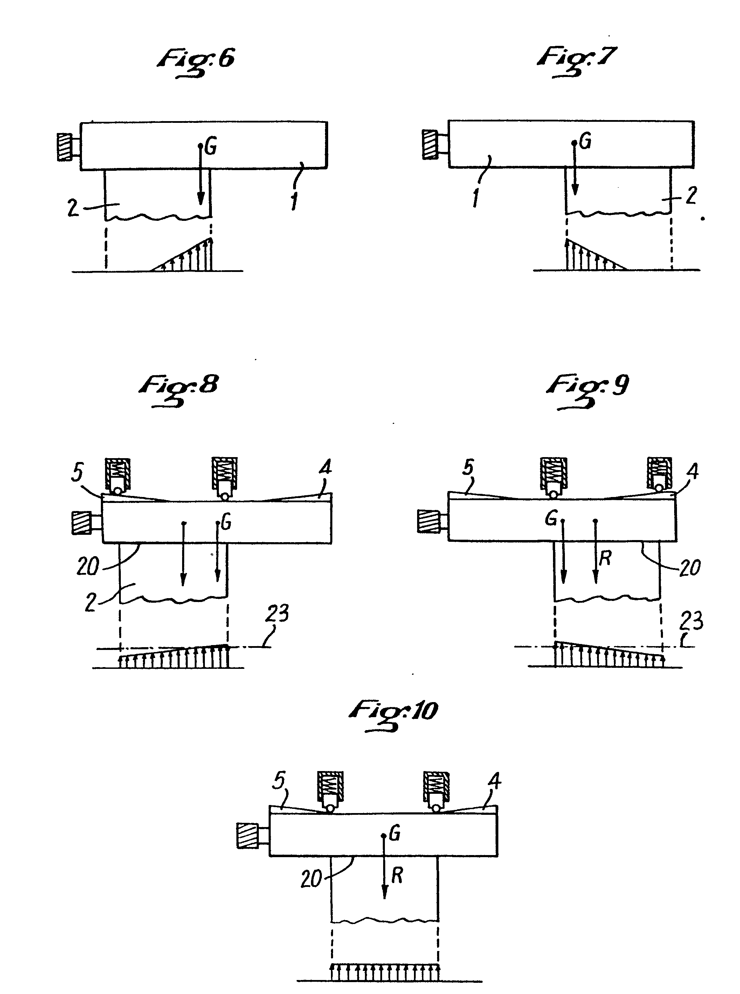

La répartition des pressions telle qu'elle résulte des déplacements du chariot 1 en l'absence des dispositions de l'invention est représentée sur les figures 6 et 7 pour les positions extrêmes. On voit que la pression est répartie très inégalement, et varie, aux extrémités du support 2, d'une valeur maximale à une valeur nulle.

Si les contre-glissières du support 2 sur lesquelles glissent les glissières 18 du chariot sont revêtues d'une matière plastique à faible coefficient de frottement, par exemple d'une épaisseur de 1 à 2 mm, la déformation de ce matériau sera très inégale et son épaisseur diminuera d'une des extrémités à l'autre, produisant des défauts de précision de l'outil pouvant atteindre plusieurs centièmes de millimètre.

Une répartition de pression satisfaisante obtenue avec le moyen de l'invention est illustrée figures 8, 9 et 10 où l'on voit que dans les positions extrêmes cette répartition est quasi uniforme, la résultante R des forces de gravité et des forces appliquées par les ressorts 12 étant constamment maintenue dans la zone médiane de la contre-glissière 20 du support.

Par le dessin des cames 4 et 5 et le choix des ressorts 12 (ou d'un équivalent tel qu'un moyen hydraulique ou oléo-pneumatique), on peut obtenir une répartition de pression plus uniforme encore telle que représentée par le tracé en traits mixtes 23.

Ces répartitions de pression ont le très grand avantage de diminuer la pression superficielle par unité de surface par rapport à la valeur maximum qu'elle atteignait à l'extrémité des glissières dans le cas des figures 6 et 7.

Pour la réalisation d'une répartition de pression satisfaisante selon l'invention, il est préféré que la distance qui sépare les points bas des cames ne soit pas supérieure à la distance entre les galets 6 et 7 et que, lorsque le chariot est en position centrale, les pressions exercées par les galets soient égales (et éventuellement nulles).

Ainsi, dès que le chariot quitte cette position centrale (définie plus haut) l'un au moins des galets exerce une pression.

Les longueurs des cames seront déterminées d'après les caractéristiques des contre-glissières supérieure et inférieure qui n'ont pas nécessairement la même longueur ni le même emplacement. Les galets 6 et 7 sont situés aussi près que possible des extrémités de la contre-glissière supérieure 19 du support 2. Les cames arrière 4 et avant 5 s'étendent respectivement depuis les points occupés par les galets 6 et 7 lorsque le chariot est en position centrale jusqu'aux extrémités arrière et avant du chariot. Elles peuvent s'étendre davantage vers le milieu du chariot, et les ressorts 12 peuvent être établis de façon à assurer une pression permanente quelle que soit la position du chariot.

D'autre part, les cames 4 et 5 peuvent être décalées latéralement de telle sorte que le galet correspondant à une came ne puisse pas coopérer avec l'autre camme quelle que soit la course du chariot 1. Cette disposition permet d'augmenter la course du chariot dans chaque sens à partir de la position centrale tout en donnant à chaque came une longueur supérieure à la course correspondante du chariot (course à partir de la position centrale jusqu'à la position extrême arrière pour la came 5 et jusqu'à la position extrême avant pour la came 4).

Dans l'exemple des figures 1 et 2, le chariot 1 est du type monté sur un support 2 qui coulisse verticalement sur un montant 22, le chariot 1 étant supporté par des glissières latérales superposées d'un seul côté.

Dans ce cas, il n'y a qu'une seule came 4 et une seule came 5 avec les galets correspondants 6 et 7.

Dans le cas des figures 4 et 5 où le chariot repose sur le support 2 par deux glissières inférieures 18a, 18b, une de chaque côté, il y a deux cames 4 et deux cames 5, une de chaque, côté, chacune associée avec le galet 6a, 6b, 7a, 7b correspondant.

## Revendications

1. Dispositif de répartition de la pression sur les glissière d'un chariot (1) de machine-outil coulissant horizontalement sur un support (2) par le moyen de galets exerçant des efforts variables en des points choisis sous l'action de deux cames dont les déplacements sont liés à ceux du chariot (1), caractérisé en ce que les cames (4 et 5) sont portées par le chariot (1) au droit et au dessus de chaque glissière inférieure (18), qu'elles sont situées respectivement sur chacune des zones avant et arrière du chariot (1), et que la ou les contre-glissières supérieures (19) du support (2) comportent à chaque extrémité un galet (6, 7) roulant sur la face supérieure de la came correspondante, ledit galet étant monté coulissant verticalement à l'encontre d'un ressort (12) ou l'équivalent, le profil des cames (4, 5) et les caractéristiques des ressorts (12) étant établis de telle sorte que le diagramme des pressions exercées par le poids du chariot (1) et l'effort supplémentaire appliqué par les galets (6, 7) donne une répartition des pressions à peu près uniforme quelle que soit la position du chariot (1), avec une résultante centrée en permanence dans la zone médiane de la contre-glissière inférieure (20) du support.

2. Dispositif selon la revendication 1, caractérisé en ce que la distance entre les points bas des cames est inférieure ou égale à la distance entre les galets.

3. Dispositif selon l'une quelconque des revendications précédentes, caractérisé en ce que le profil des cames est tel que lorsque le centre de gravité du chariot est en position centrale, c'est à dire au voisinage du milieu des glissières inférieures, les pressions exercées par les galets sont égales.

4. Dispositif selon l'une quelconque des revendications précédentes, caractérisé en ce que les zones avant et arrière du chariot qui sont couvertes par les cames s'étendent au moins depuis les points occupés respectivement sur le chariot en position centrale par les galets avant et arrière jusqu'aux points occupés respectivement par les mêmes galets lorsque le chariot est complètement reculé et lorsqu'il est complètement avancé.

5. Dispositif selon l'une quelconque des revendications précédentes, caractérisé en ce que la longueur d'une came est supérieure ou égale à la course correspondante du chariot à partir de la position centrale.

6. Dispositif selon l'une quelconque des revendications précédentes, caractérisé en ce que les cames avant et arrière sont décalées latéralement.

## Patentansprüche

1. Vorrichtung zur Verteilung des Druckes auf die Gleitführungen eines Schlittens (1) bei einer Werkzeugmaschine, der horizontal auf einem Support (2) mittels Rollen verschiebbar ist, die variable Kräfte an ausgewählten Punkten unter der Einwirkung von zwei Nocken ausüben, deren Verschiebungen mit denen des Schlittens (1) verbunden sind, dadurch gekennzeichnet, daß die Nocken (4 und 5) von dem Schlitten (1) in einer senkrechten Ebene oberhalb jeder unteren Gleitführung (18) getragen werden,

daß sie jeweils auf jeder der Zonen vorne und hinten am Schlitten (1) angeordnet sind, und daß die obere(n) Gleitgegenführung(en) (19) des Supports (2) an jedem Ende eine Rolle (6, 7) aufweisen, die auf der Oberfläche des entsprechenden Nockens abrollt und vertikal gegen eine Feder (12) oder ein äquivalentes Element verschiebbar gelagert ist, wobei die Profilform der Nocken (4, 5) und die Charakteristiken der Federn (12) derart gewählt sind, daß das Diagramm der Drücke, die durch das Gewicht des Schlittens (1) und durch die zusätzliche durch die Rollen (6, 7) aufgebrachte Kraft ausgeübt werden, eine ungefähr gleichmäßige Druckverteilung für jede Stellung des Schlittens (1) ergibt, mit einer Resultierenden, die dauernd mittig in der Mittelzone der unteren Gleitgegenführung (20) des Supports (2) verläuft.

2. Vorrichtung nach Anspruch 1, dadurch gekennzeichnet, daß der Abstand zwischen den unteren Punkten der Nocken geringer oder gleich dem Abstand zwischen den Rollen ist.

3. Vorrichtung nach einem der vorhergehenden Ansprüche, dadurch gekennzeichnet, daß die Profilform der Nocken so gewählt ist, daß, solange sich der Schwerpunkt des Schlittens in zentraler Lage, d. h. in unmittelbarer Nähe der Mitte der unteren Gleitführungen befindet, die von den Rollen ausgeübten Drücke gleich groß sind.

4. Vorrichtung nach einem der vorhergehenden Ansprüche, dadurch gekennzeichnet, daß die Zonen vorne und hinten am Schlitten, die von den Nocken bedeckt sind, sich wenigstens von den Punkten, die jeweils auf dem Schlitten in zentraler Stellung von den vorderen und hinteren Rollen besetzt sind, bis hin zu den Punkten, die jeweils von denselben Rollen besetzt sind, wenn der Schlitten vollständig ein- und ausgefahren ist, erstrecken.

5. Vorrichtung nach einem der vorhergehenden Ansprüche, dadurch gekennzeichnet, daß die Länge einer Nocke größer oder gleich dem entsprechenden Weg ist, über den der Schlitten von seiner Mittelposition aus verfahrbar ist.

6. Vorrichtung nach einem der vorhergehenden Ansprüche, dadurch gekennzeichnet, daß die Nocken vorne und hinten seitlich zueinander versetzt sind.

## Claims

1. Device for distributing pressure over the slides of a machine-tool carriage (1) sliding horizontally on a support (2) by means of rollers exerting variable strains upon points selected under the action of two cams, the displacements of which are linked to those of the carriage (1), characterized in that the cams (4 and 5) are carried by the carriage (1) at right angles with and above each lower slide (18), that they are respectively located on each of the forward and rear zones of the carriage (1) and that the upper slide-face or faces (19) of the support (2) comprise at each end a roller (6, 7) rolling on the upper face of the corresponding cam, said roller being mounted so as to slide vertically against a spring (12) or an equivalent, the profile of the cams (4, 5) and the characteristics of the springs (12) being established in such manner that the diagram of the pressures exerted by the weight of the carriage (1) and the supplementary strain applied by the rollers (6, 7) will give an approximately uniform distribution of pressures, irrespective of the position of the carriage (1), with a resultant permanently centered in the median zone of the lower slide-face (20) of the support.

2. A device according to claim 1, characterized by the distance between the low points of the cams being less than or equal to the distance between the rollers.

3. A device according to any of the above claims, characterized by the profile of the cams being such that, when the centre of gravity of the carriage is on the central position, namely in the vicinity of the middle of the lower slides, the pressures exerted by the rollers are equal.

4. A device according to any of the above claims, characterized in that the forward and rear zones of the carriage which are covered by the cams extend at least from the points respectively occupied on the carriage in central position by the forward and rear rollers up to the points respectively occupied by these same rollers when the carriage is fully moved back and when it is fully extended forward.

5. A device according to any of the above claims, characterized by the length of a cam being longer than or equal to the corresponding stroke of the carriage starting from the central position.

6. A device according to any of the above claims, characterized by the front and rear cams being laterally out of line.

*Fig.1*

*Fig.2*

*Fig.3*

**Fig.5**

**Fig.4**

## Fig:6

## Fig:7

## Fig:8

## Fig:9

## Fig:10